# EUROPEAN PATENT APPLICATION

(11) **EP 4 819 315 A1**
(43) Date of publication of application: **07.10.2026**
(21) Application number: 24927996.9
(22) Date of filing: 05.08.2024
(51) Int. Cl.: H01M 50/15, H01M 50/249, H01M 50/209

(54) **BATTERY CELL, BATTERY, AND ELECTRIC DEVICE**

(30) Priority: 04.03.2024 CN 202420411725 U
(71) Applicant: Contemporary Amperex Technology Co., Limited, Ningde, Fujian 352100 (CN)
(72) Inventor: LIN, Denghua, Ningde, Fujian 352100 (CN); CHEN, Xinxiang, Ningde, Fujian 352100 (CN); ZHOU, Wenlin, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Lorenz Seidler Gossel Part. mbB
(86) International application number: PCT/CN2024/109864
(87) International publication number: WO 2025/185063

(57) **Abstract**

Provided is a battery cell (10). The battery cell (10) includes a housing (1) and an electrode assembly (2). The housing (1) includes a wall part (11) and an end cover (12). The wall part (11) defines, in an enclosing manner, an accommodating cavity having an opening in a first direction Z, and the end cover (12) is disposed to cover the opening; the end cover (12) includes a base body (121) and an edge (122) disposed in an enclosing manner at an outer periphery of the base body (121), and the edge (122) is connected to the wall part (11) and is provided in a protruding manner in the first direction Z relative to the base body (121) toward a side away from the wall part (11). The electrode assembly (2) is disposed in the accommodating cavity. The base body (121) is provided with a protruding part, the protruding part (13) is disposed on a side, away from the wall part (11), of the base body (121), and in the first direction Z, a protruding distance of the protruding part (13) relative to the base body (121) is greater than or equal to a protruding distance of the edge (122) relative to the base body (121).

## Description

### CROSS-REFERENCE TO RELATED APPLICATION

The present application claims priority to Chinese Patent Application No. 202420411725.9 filed on March 4, 2024 and entitled "BATTERY CELL, BATTERY, AND ELECTRIC DEVICE", the content of which is incorporated herein by reference in its entirety.

### TECHNICAL FIELD

The present application pertains to the technical field of batteries, and in particular, to a battery cell, a battery, and an electric device.

### BACKGROUND

Energy conservation and emission reduction are the keys to the sustainable development of the automobile industry. Electric vehicles have become an important part of the sustainable development of the automobile industry due to their energy-saving and environmental protection advantages. For electric vehicles, the battery technology is an important factor in their development.

At present, in a battery cell, the end cover adopts a stepped design, so after the end cover is welded to the housing, protrusions are formed at the edges, and thus, when the battery cell is assembled in the battery, local stress concentration is formed at the edges, which affects the service life of the battery. Therefore, how to optimize the internal stress distribution of the battery has become an urgent problem to be solved.

### SUMMARY

In view of the above problem, the present application provides a battery cell, a battery, and an electric device, which can reduce the force applied to the edges, optimize the stress distribution, and prolong the service life of the battery.

In a first aspect, the present application provides a battery cell. The battery cell includes a housing and an electrode assembly. The housing includes a wall part and an end cover. The wall part defines, in an enclosing manner, an accommodating cavity having an opening in a first direction, and the end cover is disposed to cover the opening; the end cover includes a base body and an edge disposed in an enclosing manner at an outer periphery of the base body, and the edge is connected to the wall part and is provided in a protruding manner in the first direction relative to the base body toward a side away from the wall part. The electrode assembly is disposed in the accommodating cavity. The base body is provided with a protruding part, the protruding part is disposed on a side, away from the wall part, of the base body, and in the first direction, a protruding distance of the protruding part relative to the base body is greater than or equal to a protruding distance of the edge relative to the base body.

In the embodiments of the present application, the protruding part is provided on the base body of the end cover, and the protruding distance of the protruding part relative to the base body is caused to be greater than or equal to the protruding distance of the edge relative to the base body, such that when the battery cell is disposed in a battery pack, the battery cell can bear the force by means of the protruding part, thereby dispersing or eliminating the force applied to the edge, optimizing the stress distribution, and prolonging the service life of the battery.

In some embodiments, the edge and the protruding part are disposed offset from the base body in the first direction, and in a second direction, the edge is spaced apart from the protruding part, the second direction intersecting the first direction, such that the positioning cooperation between the end cover and the wall part can be achieved while the protruding part is provided, thereby improving the reliability of the battery cell.

In some embodiments, the protruding part and the base body are provided as an integrated structure, and the protruding part may be formed by stamping the base body in the first direction, so as to simplify the preparation process of the end cover, reduce the weight of the end cover, and reduce the cost.

In some embodiments, a thickness of the protruding part in the first direction is equal to a thickness of the base body in the first direction, which facilitates stamping and is beneficial to prolonging the service life of the stamping mold.

In some embodiments, an area of an orthographic projection of the protruding part in the first direction is greater than or equal to half of an area of an orthographic projection of the edge in the first direction. By increasing the area of the protruding part and allowing the area of the protruding part to reach more than half of the area of the edge, the force applied to the edge can be effectively reduced, thereby better optimizing the stress distribution of the battery and prolonging the service life of the battery.

In some embodiments, one side of the accommodating cavity in the first direction is provided with the opening, the end cover includes a first cover plate, and the first cover plate is disposed to cover the opening; or two sides of the accommodating cavity in the first direction are both provided with the openings, the end cover includes a first cover plate and a second cover plate, and the first cover plate and the second cover plate are disposed to cover the openings on the two sides, respectively.

In some embodiments, the first cover plate is provided with a press contact region configured to bear a pressing plate, and a protruding part of the first cover plate is at least partially disposed in the press contact region, so as to disperse or eliminate the force applied to the edge by using the protruding part to bear the force, thereby optimizing the force applied to the battery.

In some embodiments, the first cover plate is provided with a pressure relief mechanism, and a protruding part of the first cover plate is at least partially located on a peripheral side of the pressure relief mechanism, such that the structural strength at the position of the pressure relief mechanism can be increased, the pulling force on the pressure relief mechanism caused by the expansion force can be reduced, and the service life of the pressure relief structure can be prolonged.

In some embodiments, the battery cell further includes an insulating member; the insulating member is disposed in the accommodating cavity, and the electrode assembly is supported on the second cover plate by means of the insulating member.

In some embodiments, a protruding part of the second cover plate is at least partially located within a range of an orthographic projection of the insulating member on the second cover plate in the first direction; the insulating member is provided with a support part protruding toward the second cover plate, and the insulating member abuts against the protruding part of the second cover plate through the support part.

In the embodiments of the present application, when the area of the protruding part is relatively large, the support part may be disposed on the insulating member, such that the support part abuts against the protruding part, thereby realizing the support for the insulating member is by means of the base body and the protruding part. This increases the contact area between the insulating member and the second cover plate, reduces the stress concentration between the insulating member and the second cover plate, and optimizes the stress distribution of the battery cell.

In a second aspect, the embodiments of the present application provide a battery. The battery includes the battery cell according to the first aspect.

In a third aspect, the embodiments of the present application provide an electric device. The electric device includes the battery according to the second direction, and the battery is configured to provide electric energy.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a battery cell in the prior art;
FIG. 2 is a partially enlarged view of an edge of an end cover of a battery in the prior art;
FIG. 3 is a schematic structural diagram of a battery cell assembled in a battery in the prior art;
FIG. 4 is a schematic structural diagram of a vehicle according to some embodiments of the present application;
FIG. 5 is an exploded view of a battery according to some embodiments of the present application;
FIG. 6 is a schematic structural diagram of a battery cell from one perspective according to some embodiments of the present application;
FIG. 7 is an exploded view of a battery cell according to some embodiments of the present application;
FIG. 8 is a schematic structural diagram of a battery cell according to some other embodiments of the present application;
FIG. 9 is a schematic structural diagram of a battery cell from another perspective according to some embodiments of the present application;
FIG. 10 is a cross-sectional view taken along the A-A direction in FIG. 6;
FIG. 11 is a partial cross-sectional view of a battery cell according to some embodiments of the present application; and
FIG. 12 is a partial cross-sectional view of a battery cell according to some other embodiments of the present application.

The drawings are not necessarily drawn to scale.

Description of the reference numerals:
100: battery; 200: controller; 300: motor;
10: battery cell; 20: pressing plate; 30: bottom plate;
1: housing; 11: wall part; 12: end cover; 121: base body; 122: edge; 12a: first cover plate; 121a: pressure relief mechanism; 12b: second cover plate; 13: protruding part; 2: electrode assembly; 3: insulating member; 31: support part;
X: second direction; Z: first direction.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

It should be noted that unless otherwise specified, the technical or scientific terms used in the embodiments of the present application shall have ordinary meanings understood by those skilled in the art to which the embodiments of the present application belong.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate orientations or positional relationships based on those shown in the drawings. They are merely for the convenience of describing the embodiments of the present application and simplifying the description, rather than indicating or implying that the device or element referred to must have a specific orientation or be constructed and operated in the specific orientation, and thus should not be construed as a limitation to the embodiments of the present application.

In addition, the technical terms "first", "second", and the like are used for description only and are not to be construed as indicating or implying relative importance or to implicitly indicate the number of technical features indicated. In the description of the embodiments of the present application, unless otherwise specifically defined, "plurality of" means two or more.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

In the description of the embodiments of the present application, unless otherwise clearly specified and defined, a first feature being "above" or "below" a second feature may be that the first feature and the second feature are in direct contact, or that the first feature and the second feature are in indirect contact via an intermediate. Moreover, a first feature being "on", "above", and "over" a second feature may be that the first feature is directly above or obliquely above the second feature, or simply indicates that the level of the first feature is higher than that of the second feature. A first feature being "under", "below", and "beneath" a second feature may be that the first feature is directly below or obliquely below the second feature, or simply indicates that the level of the first feature is lower than that of the second feature.

At present, judging from the trends in the market, the application of power batteries is becoming increasingly widespread. Power batteries are not only applied in energy storage power systems, such as hydropower, thermal power, wind power, and solar power stations, but also widely applied in electric transportation vehicles, such as electric bicycles, electric motorcycles, or electric vehicles, as well as in military equipment, aerospace, and other fields. With the continuous expansion of the application field of power batteries, the market demand for power batteries is also constantly increasing.

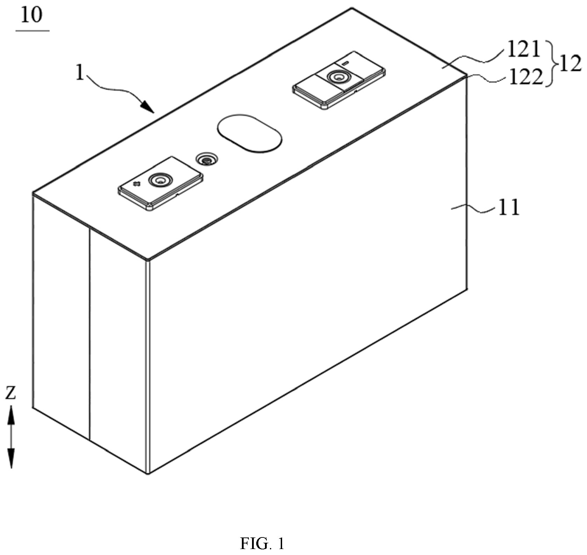

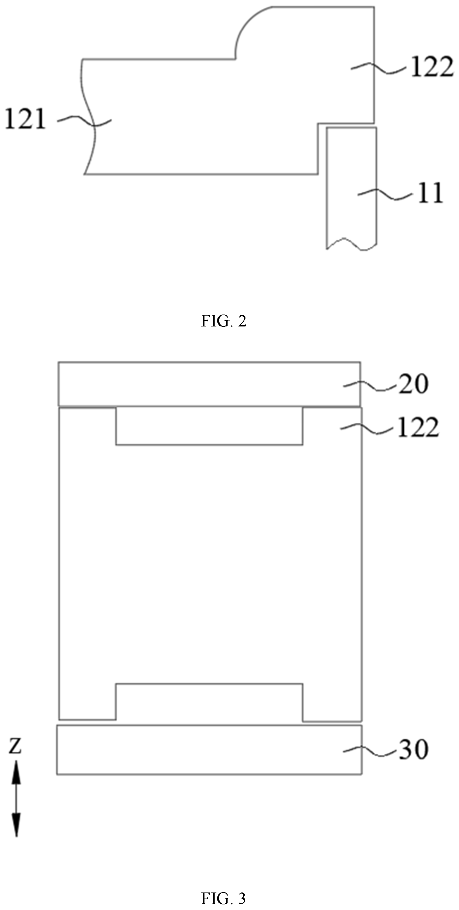

Referring to FIGs. 1 to 3, FIG. 1 is a schematic structural diagram of a battery cell 10 in the prior art, FIG. 2 is a partially enlarged view of an edge 122 of an end cover 12 of a battery in the prior art, and FIG. 3 is a schematic structural diagram of a battery cell 10 assembled in a battery 100 in the prior art.

The applicant noted that in an existing battery 100, an end cover 12 is often welded to a wall part 11 of a housing 1 by butt welding. The end cover 12 adopts a stepped design, and the welding between the end cover 12 and the wall part 11 is achieved by the cooperation between the step and the wall part 11.

However, in the above end cover structure, after the end cover 12 is welded to the wall part 11, a protrusion is formed at an edge 122 of the end cover 12. When the battery cell 10 is assembled in the battery 100, the battery cell 10 abuts against plate bodies on two sides, i.e., a pressing plate 20 and a bottom plate 30, through the edge 122, thereby causing force at the edge 122. In one aspect, the edge 122 is a welding region, i.e., a region where the strength of the battery cell 10 is weak, such that the force applied to the edge 122 increases the risk of damage to the battery 100. In another aspect, the contact area between the edge 122 and the plate bodies on the two sides is small, which may easily cause local stress concentration in the battery 100, thereby affecting the reliability of the battery 100 and shortening the service life.

Based on the above considerations, to optimize the internal stress distribution of the battery 100, the applicant has conducted in-depth research and designed a battery cell 10. A protruding part 13 is provided on an end cover 12 of the battery cell 10, and the protruding distance of the protruding part 13 is greater than or equal to the protruding distance of a protrusion at an edge 122. In such a battery cell 10, when the battery cell 10 is assembled in the battery 100, the battery cell 10 can be in contact with the plate body of the battery 100 through the protruding part 13, such that the force applied to the edge 122 is reduced, thereby reducing the risk of damage at the welding position, optimizing the stress distribution of the battery 100, and prolonging the service life of the battery 100.

The technical solutions described in the embodiments of the present application are applicable to the battery 100 and an electric device using the battery 100.

The electric device may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a pure electric vehicle, a hybrid vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric device described above is not specially limited in the embodiments of the present application.

It should be understood that the technical solutions described in the embodiments of the present application are applicable to all electric devices that include the battery 100 and use the battery 100. However, for brevity, the following embodiments are all illustrated using an electric vehicle as an example.

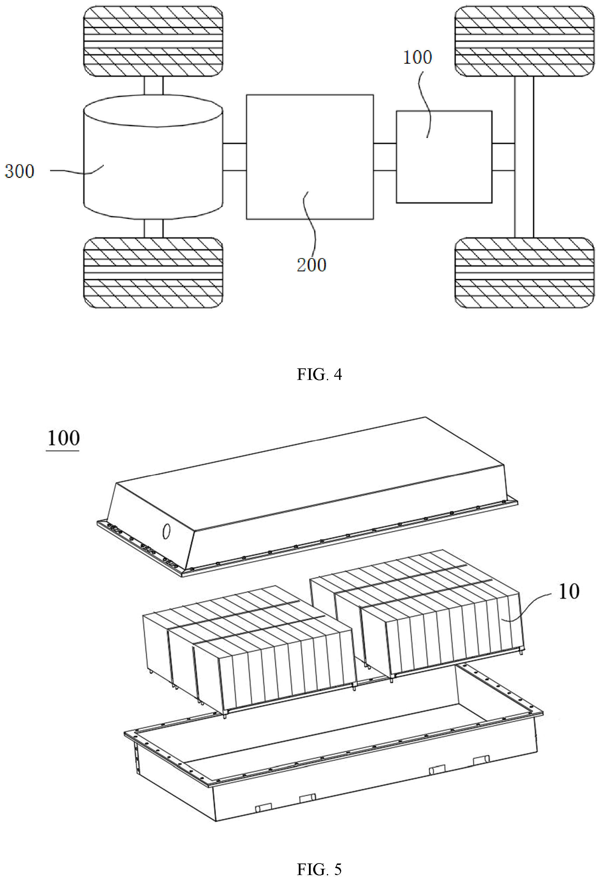

Referring to FIG. 4, FIG. 4 is a schematic structural diagram of a vehicle according to some embodiments of the present application.

A battery 100 is disposed inside the vehicle, and the battery 100 may be disposed at the bottom, head, or rear of the vehicle. The battery 100 may be configured to supply power to the vehicle. For example, the battery 100 may serve as an operation power source for the vehicle. The vehicle may further include a controller 200 and a motor 300. The controller 200 is configured to control the battery 100 to supply power to the motor 300, e.g., for the operation power needed by the vehicle for start-up, navigation, and driving.

Referring to FIG. 5, FIG. 5 is an exploded schematic view of a battery 100 according to some embodiments of the present application.

The battery 100 mentioned in the embodiments of the present application refers to a single physical module including one or a plurality of battery cells 10 to provide higher voltage and capacity. For example, the battery 100 mentioned in the present application may include a battery module, a battery pack, or the like. Generally, the battery 100 further includes a case configured to enclose one or a plurality of battery cells 10. The case can prevent liquid or other foreign matter from affecting the charging or discharging of the battery cells 10.

In the present application, the battery cells 10 include, but are not limited to, lithium-ion secondary battery cells 10, lithium-ion primary battery cells 10, lithium-sulfur battery cells 10, sodium-lithium-ion battery cells 10, sodium-ion battery cells 10, magnesium-ion battery cells 10, or the like. The battery cell 10 is, but is not limited to, cylindrical, flat, rectangular parallelepiped-shaped, or in other shapes.

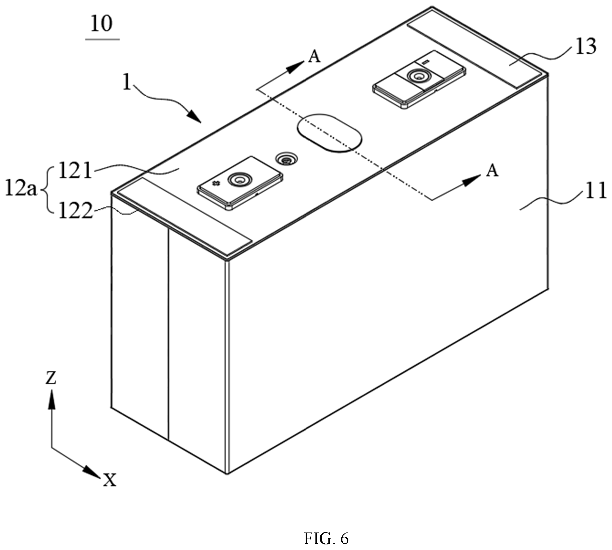

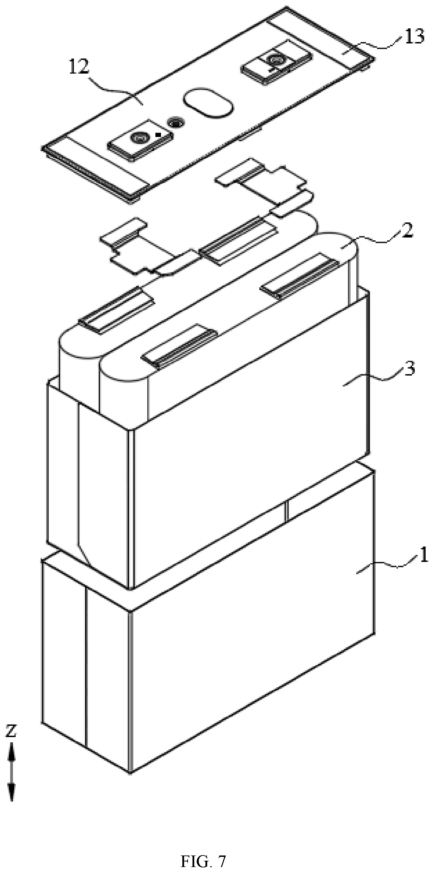

Referring to FIGs. 6 and 7, FIG. 6 is a schematic structural diagram of a battery cell 10 from one perspective according to some embodiments of the present application, and FIG. 7 is a schematic diagram of an exploded structure of a battery cell 10 according to some embodiments of the present application. The battery cell 10 refers to the smallest unit forming the battery 100, and the battery cell 10 includes a housing 1, an electrode assembly 2, and other functional components. The electrode assembly 2 is a component where the electrochemical reaction occurs in the battery cell 10. One or more electrode assemblies 2 may be accommodated in the housing 1.

The housing 1 includes a wall part 11 and an end cover 12. The end cover 12 refers to a component that covers the opening of the housing 1 to isolate the internal environment of the battery cell 10 from the external environment. Without limitation, the shape of the end cover 12 may be adapted to the shape of the housing 1 to cooperate with the housing 1. Optionally, the end cover 12 may be made of a material with a certain hardness and strength (for example, an aluminum alloy), such that the end cover 12 is not easily deformed when being squeezed or collided. This enables the battery cell 10 to have higher structural strength, and the safety performance can also be improved. Functional components, such as electrode terminals, may be provided on the end cover 12.

The wall part 11 is an assembly configured to cooperate with the end cover 12 to form the internal environment of the battery cell 10. The formed internal environment may be used to accommodate the electrode assembly 2, the electrolyte, and other components. The wall part 11 and the end cover 12 may be independent components. An opening may be formed in the wall part 11, and at the opening, the end cover 12 covers the opening to form the internal environment of the battery cell 10.

According to some embodiments of the present application, referring to FIGs. 6 and 7, the present application provides a battery cell 10. The battery cell 10 includes a housing 1 and an electrode assembly 2. The housing 1 includes a wall part 11 and an end cover 12. The wall part 11 defines, in an enclosing manner, an accommodating cavity having an opening in a first direction Z, and the end cover 12 is disposed to cover the opening. The end cover 12 includes a base body 121 and an edge 122 disposed in an enclosing manner at the outer periphery of the base body 121; the edge 122 is connected to the wall part 11 and is provided in a protruding manner in the first direction Z relative to the base body 121 toward a side away from the wall part 11. The electrode assembly 2 is disposed in the accommodating cavity. The base body 121 is provided with a protruding part 13, and the protruding part 13 is disposed on a side, away from the wall part 11, of the base body 121. Additionally, in the first direction Z, the protruding distance of the protruding part 13 relative to the base body 121 is greater than or equal to the protruding distance of the edge 122 relative to the base body 121.

In the embodiments of the present application, the protruding part 13 is provided on the base body 121 of the end cover 12, and the protruding distance of the protruding part 13 relative to the base body 121 is caused to be greater than or equal to the protruding distance of the edge 122 relative to the base body 121, such that when the battery cell 10 is assembled in the battery 100, the battery cell 10 can bear the force by means of the protruding part 13, thereby dispersing or eliminating the force applied to the edge 122, optimizing the stress distribution, and prolonging the service life of the battery 100.

Specifically, the protruding distance of the protruding part 13 relative to the base body 121 is greater than or equal to the protruding distance of the edge 122 relative to the base body 121, including two cases.

One case is that the protruding distance of the protruding part 13 relative to the base body 121 is greater than the protruding distance of the edge 122 relative to the base body 121. When the battery cell 10 is assembled in the battery 100, the battery cell 10 is in contact with the plate body of the battery 100 through the protruding part 13, so as to bear the force by using the protruding part 13. In this case, the edge 122 is not subjected to the force, thereby reducing the risk of damage at the welding position and prolonging the service life of the battery 100.

The other case is that the protruding distance of the protruding part 13 relative to the base body 121 is equal to the protruding distance of the edge 122 relative to the base body 121; that is, the protruding part 13 is flush with the edge 122. When the battery cell 10 is assembled in the battery 100, the protruding part 13 and the edge 122 of the battery cell 10 are in contact with the plate body of the battery 100, such that the contact area between the battery cell 10 and the plate body of the battery can be increased, thereby dispersing the force applied to the edge 122 by using both the protruding part 13 and the edge 122 to bear the force, optimizing the stress distribution of the battery 100, and prolonging the service life of the battery 100.

It can be understood that the specific protruding distance of the protruding part 13 relative to the base body 121 may be adjusted according to the structure of the battery cell 10, as long as the protruding distance of the protruding part 13 relative to the base body 121 is greater than or equal to the protruding distance of the edge 122 relative to the base body 121 to achieve the contact between the protruding part 13 and the upper plate body of the battery pack.

In some optional embodiments, the edge 122 and the protruding part 13 are disposed offset from the base body 121 in the first direction Z, and in a second direction X, the edge 122 is spaced apart from the protruding part 13, the second direction X intersecting the first direction Z.

The edge 122 and the protruding part 13 being disposed offset from the base body 121 in the first direction Z means that the edge 122 and the protruding part 13 are at different heights from the base body 121 in the first direction Z, such that on a side surface, away from the wall part 11, of the end cover 12, the edge 122 and the protruding part 13 are provided in a protruding manner relative to the base body 121, while on a side surface, facing the wall part 11, of the end cover 12, the base body 121 is provided in a protruding manner relative to the edge 122 and the protruding part 13. Moreover, since the edge 122 is spaced apart from the protruding part 13 in the second direction X, on the side surface, facing the wall part 11, of the end cover 12, the base body 121 and the edge 122 can define, in an enclosing manner, an engagement groove, and the wall part 11 cooperates with the engagement groove, such that the positioning cooperation between the end cover 12 and the wall part 11 can be achieved while the protruding part 13 is provided, thereby improving the reliability of the battery cell 10.

It can be understood that the protruding part 13 and the base body 121 may be provided as an integrated structure. For example, the protruding part 13 may be formed by stamping the base body 121 in the first direction Z, so as to simplify the preparation process of the end cover 12, reduce the weight of the end cover 12, and reduce the cost.

Optionally, the thickness of the protruding part 13 in the first direction Z is equal to the thickness of the base body 121 in the first direction Z. The thickness of the protruding part 13 is consistent with the thickness of the base body 121, which facilitates stamping and is beneficial to prolonging the service life of the stamping mold.

In some optional embodiments, the area of the orthographic projection of the protruding part 13 in the first direction Z is greater than or equal to half of the area of the orthographic projection of the edge 122 in the first direction Z.

By increasing the area of the protruding part 13 and allowing the area of the protruding part 13 to reach more than half of the area of the edge 122, the force applied to the edge 122 can be effectively reduced. For example, when the area of the protruding part 13 is equal to half of the area of the edge 122, the force applied to the edge 122 can be reduced to 30%, thereby better optimizing the stress distribution of the battery 100 and prolonging the service life of the battery 100.

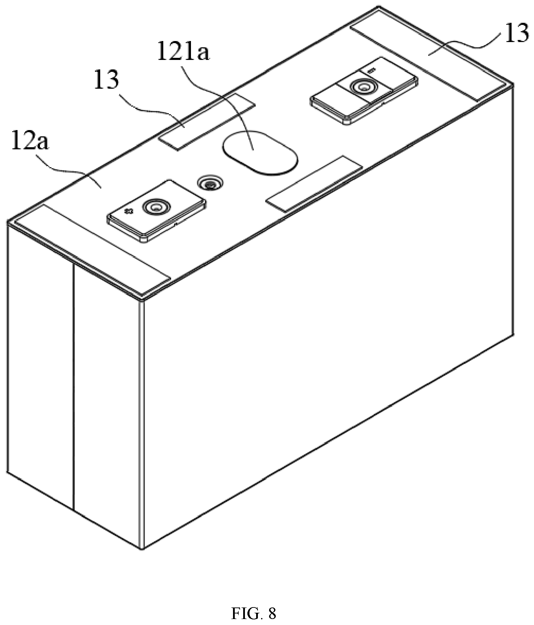

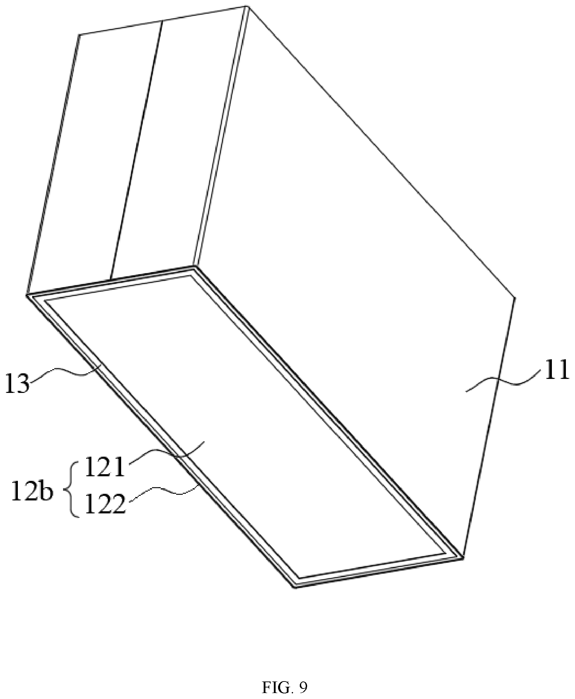

Referring to FIGs. 6, 8, and 9 together, FIGs. 6 and 8 show schematic structural diagrams of a battery cell 10 on a side of a first cover plate 12a according to some embodiments of the present application, and FIG. 9 shows a schematic structural diagram of a battery cell 10 on a side of a second cover plate 12b according to some embodiments of the present application.

It should be noted that the wall part 11 defining, in an enclosing manner, the accommodating cavity having an opening in the first direction Z includes: the wall part 11 including a bottom wall and a side wall disposed around the bottom wall, where the bottom wall and the side wall define, in an enclosing manner, the accommodating cavity, and only one side of the accommodating cavity in the first direction Z is provided with an opening; or the wall part 11 including a plurality of side walls, where the side walls are configured to surround the electrode assembly 2 and define, in an enclosing manner, the accommodating cavity, and two ends of the accommodating cavity in the first direction Z are provided with openings.

Correspondingly, in some optional embodiments, when only one side of the accommodating cavity in the first direction Z is provided with an opening, the end cover 12 may include only the first cover plate 12a, and the first cover plate 12a is disposed to cover the opening; or, when two sides of the accommodating cavity in the first direction Z are both provided with openings, the end cover 12 includes the first cover plate 12a and the second cover plate 12b, and the first cover plate 12a and the second cover plate 12b are disposed to cover the openings on the two sides, respectively.

The first cover plate 12a is a top cover plate, and the second cover plate 12b is a bottom cover plate. Therefore, when the battery cell 10 is assembled in the battery 100, the pressing plate 20 is in press contact with the first cover plate 12a, and the bottom plate 30 is in press contact with the second cover plate 12b, thereby limiting the position of the battery cell 10 and improving the stability of the battery cell 10.

Since the first cover plate 12a and the second cover plate 12b have different structures, and the first cover plate 12a and the second cover plate 12b are subjected to different forces with the upper plate body of the battery 100, the specific positions of the protruding parts 13 on the first cover plate 12a and the second cover plate 12b need to be adjusted separately.

Referring to FIGs. 6 and 8, for the first cover plate 12a, in some optional embodiments, the first cover plate 12a is provided with a press contact region configured to bear the pressing plate 20, and the protruding part 13 of the first cover plate 12a is at least partially disposed in the press contact region, so as to disperse or eliminate the force applied to the edge 122 by using the protruding part 13 to bear the force, thereby optimizing the force applied to the battery 100.

Optionally, in the press contact region at the shoulder of the battery cell 10, the protruding part 13 of the first cover plate 12a may be provided to protrude over an entire local surface, so as to increase the press contact area between the battery cell 10 and the pressing plate 20 by increasing the area of the protruding part 13. In addition, since the protrusion part protrudes over the entire local surface, the internal space of the battery cell 10 can also be increased, thereby improving the energy density of the battery 100.

In some optional embodiments, the first cover plate 12a is provided with a pressure relief mechanism 121a, and the protruding part 13 is at least partially located on the peripheral side of the pressure relief mechanism 121a. The pressure relief mechanism 121a includes, but is not limited to, an anti-explosion valve, a rupture disk, and a combined device of the anti-explosion valve and the rupture disk, and can ensure that gas can be discharged through the pressure relief mechanism 121a for pressure relief when the pressure in the accommodating cavity is extremely large.

When the first cover plate 12a is further provided with functional components such as the pressure relief mechanism 121a, the protruding part 13 may also be provided on the peripheral side of the pressure relief mechanism 121a, such that the structural strength at the position of the pressure relief mechanism 121a can be increased while optimizing the stress distribution of the battery 100, the pulling force on the pressure relief mechanism 121a caused by the expansion force can be reduced, and the service life of the pressure relief structure can be prolonged.

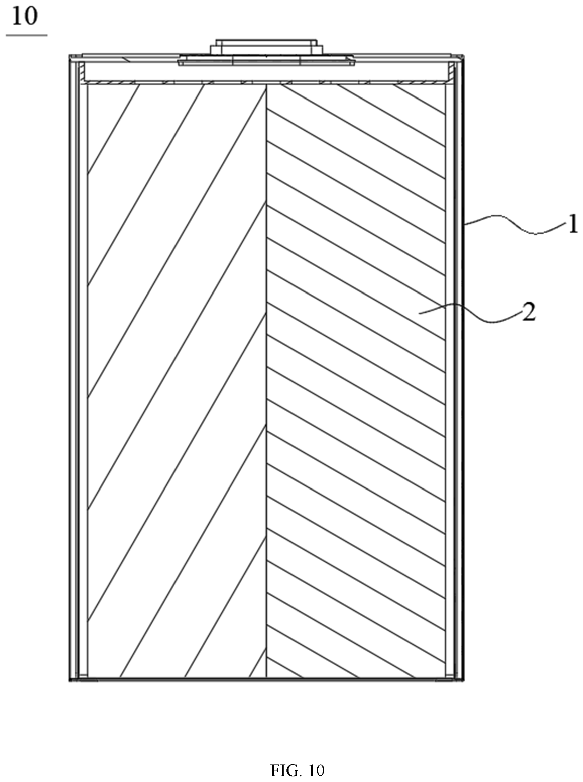

Referring to FIGs. 9 to 11, FIG. 11 shows a partial cross-sectional view of a battery cell 10 according to some embodiments of the present application. For the second cover plate 12b, in addition to being in press contact with the bottom plate 30, the second cover plate 12b also needs to support the electrode assembly 2 in the accommodating cavity. In some optional embodiments, the battery cell 10 further includes an insulating member 3; the insulating member 3 is disposed in the accommodating cavity, and the electrode assembly 2 is supported on the second cover plate 12b by means of the insulating member 3.

Optionally, on the second cover plate 12b, the protruding part 13 may be provided to extend along the circumferential direction of the base and form an annular structure; the protruding part 13 may also be provided over an entire local surface and form a plate-shaped structure; the protruding parts 13 may also be spaced apart from each other on the base body 121. That is, the shape and size of the protruding part 13 may be adjusted according to the specific structure of the battery 100.

It can be understood that when the protruding part 13 is disposed offset from the base body 121 in the first direction Z, on the side surface, facing the wall part 11, of the end cover 12, the base body 121 is provided in a protruding manner relative to the edge 122 and the protruding part 13. Therefore, the electrode assembly 2 is supported on the base body 121 by means of the insulating member 3.

In some embodiments, when the area of the protruding part 13 is small, for example, when the protruding part 13 is designed as a rib with a locally small area, the area of the base body 121 is relatively large. Therefore, the insulating member 3 may be directly disposed on the base body 121, such that the insulating member 3 can be supported by means of the base body 121.

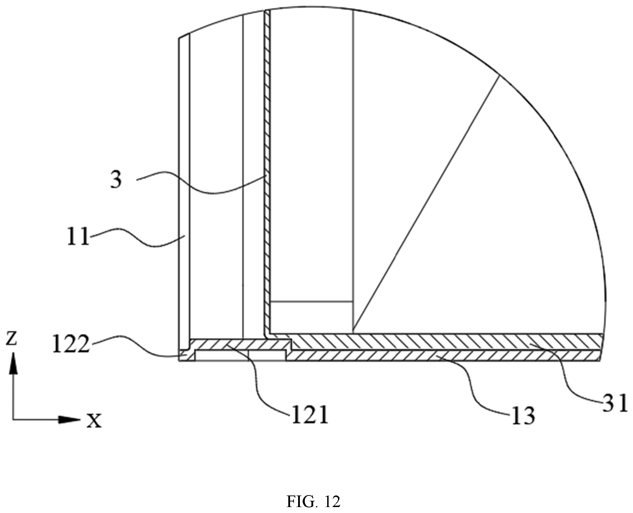

Referring to FIG. 12, FIG. 12 shows a partial cross-sectional view of a battery cell 10 according to some other embodiments of the present application.

In some other embodiments, when the area of the protruding part 13 is relatively large, for example, when the protruding part 13 is provided over an entire local surface, the area of the base body 121 is relatively small. Therefore, on this basis, the protruding part 13 of the second cover plate 12b is at least partially located within the range of the orthographic projection of the insulating member 3 on the second cover plate 12b in the first direction Z, the insulating member 3 is provided with a support part 31 protruding toward the second cover plate 12b, and the insulating member 3 abuts against the protruding part 13 of the second cover plate 12b through the support part 31.

The support part 31 is disposed on the insulating member 3, such that the support part 31 can abut against the protruding part 13, thereby realizing the support for the insulating member 3 by means of the base body 121 and the protruding part 13. This increases the contact area between the insulating member 3 and the second cover plate 12b, reduces the stress concentration between the insulating member 3 and the second cover plate 12b, and optimizes the stress distribution of the battery cell 10.

Optionally, the support part 31 may match the protruding part 13; that is, the orthographic projection of the support part 31 on the second cover plate 12b in the first direction Z coincides with the protruding part 13, thereby further increasing the contact area between the insulating member 3 and the second cover plate 12b and optimizing the stress distribution.

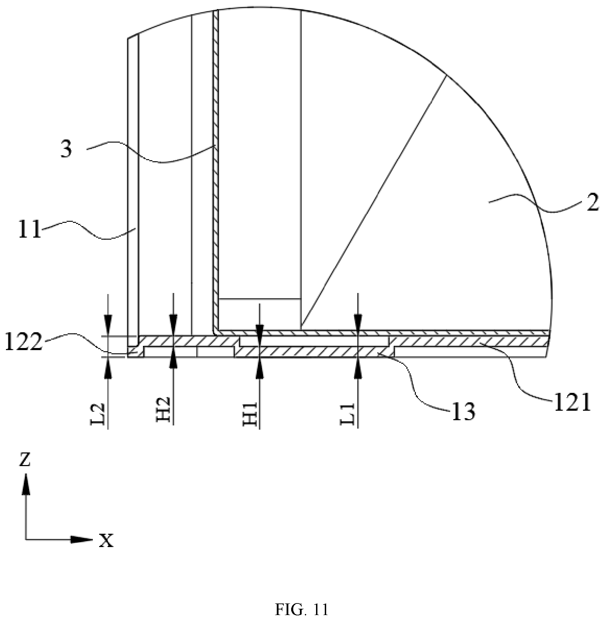

According to some embodiments of the present application, referring to FIGs. 4 to 12 together, the present application provides a battery cell 10. The wall part 11 includes a plurality of side walls, and the side walls define, in an enclosing manner, an accommodating cavity having openings on two sides; the end cover 12 includes a first cover plate 12a and a second cover plate 12b, and the first cover plate 12a and the second cover plate 12b are disposed to cover the openings on the two sides, respectively. The first cover plate 12a and the second cover plate 12b are each provided with a protruding part 13. Referring to FIG. 11, the thickness H1 of the protruding part 13 in the first direction Z is equal to the thickness H2 of the base body 121 in the first direction Z; the protruding part 13 is formed by integrally stamping the base body 121, and in the first direction Z, the protruding distance L1 of the protruding part 13 relative to the base body 121 is equal to the protruding distance L2 of the edge 122 relative to the base body 121. Therefore, when the battery cell 10 is assembled in the battery 100, the protruding part 13 and the edge 122 of the battery cell 10 are in contact with the plate body of the battery 100, such that the contact area between the battery cell 10 and the plate body of the battery is increased, thereby dispersing the force applied to the edge 122 by using both the protruding part 13 and the edge 122 to bear the force, optimizing the stress distribution of the battery 100, and prolonging the service life of the battery 100.

According to some embodiments of the present application, the present application further provides a battery 100. The battery includes the battery cell 10 according to any one of the above solutions.

According to some embodiments of the present application, the present application further provides an electric device. The electric device includes the battery 100 according to any one of the above solutions, and the battery 100 is configured to provide electric energy for the electric device.

The electric device may be any one of the aforementioned devices or systems in which the battery 100 is used.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell, comprising:
a housing, comprising a wall part and an end cover, wherein the wall part defines, in an enclosing manner, an accommodating cavity having an opening in a first direction, and the end cover is disposed to cover the opening; the end cover comprises a base body and an edge disposed in an enclosing manner at an outer periphery of the base body, and the edge is connected to the wall part and is provided in a protruding manner in the first direction relative to the base body toward a side away from the wall part; and
an electrode assembly, disposed in the accommodating cavity;
wherein the base body is provided with a protruding part, the protruding part is disposed on a side, away from the wall part, of the base body, and in the first direction, a protruding distance of the protruding part relative to the base body is greater than or equal to a protruding distance of the edge relative to the base body.

2. The battery cell according to claim 1, wherein the edge and the protruding part are disposed offset from the base body in the first direction, and in a second direction, the edge is spaced apart from the protruding part, the second direction intersecting the first direction.

3. The battery cell according to claim 2, wherein the protruding part and the base body are provided as an integrated structure.

4. The battery cell according to claim 2, wherein a thickness of the protruding part in the first direction is equal to a thickness of the base body in the first direction.

5. The battery cell according to claim 1, wherein an area of an orthographic projection of the protruding part in the first direction is greater than or equal to half of an area of an orthographic projection of the edge in the first direction.

6. The battery cell according to any one of claims 1 to 5, wherein one side of the accommodating cavity in the first direction is provided with the opening, the end cover comprises a first cover plate, and the first cover plate is disposed to cover the opening;
or two sides of the accommodating cavity in the first direction are both provided with the openings, the end cover comprises a first cover plate and a second cover plate, and the first cover plate and the second cover plate are disposed to cover the openings on the two sides, respectively.

7. The battery cell according to claim 6, wherein the first cover plate is provided with a press contact region configured to bear a pressing plate, and a protruding part of the first cover plate is at least partially disposed in the press contact region.

8. The battery cell according to claim 6, wherein the first cover plate is provided with a pressure relief mechanism, and a protruding part of the first cover plate is at least partially located on a peripheral side of the pressure relief mechanism.

9. The battery cell according to claim 6, further comprising an insulating member, wherein the insulating member is disposed in the accommodating cavity, and the electrode assembly is supported on the second cover plate by means of the insulating member.

10. The battery cell according to claim 9, wherein a protruding part of the second cover plate is at least partially located within a range of an orthographic projection of the insulating member on the second cover plate in the first direction;
the insulating member is provided with a support part protruding toward the second cover plate, and the insulating member abuts against the protruding part of the second cover plate through the support part.

11. A battery, comprising the battery cell according to any one of claims 1 to 10.

12. An electric device, comprising the battery according to claim 11, wherein the battery is configured to provide electric energy.
